# EUROPEAN PATENT APPLICATION

(11) **EP 3 944 773 A1**
(43) Date of publication of application: **02.02.2022**
(21) Application number: 20464008.0
(22) Date of filing: 10.08.2020
(51) Int. Cl.: A23L 17/00, A23B 4/005, A23L 3/10, A23L 27/10, A23L 31/00

(54) **TROUT PASTE WITH CHANTERELLE MUSHROOMS AND WILD GARLIC AND PROCESS FOR OBTAINING IT**

(30) Priority: 28.07.2020 RO 202000450
(71) Applicant: Stefan cel Mare University of Suceava, 720229 Suceava, County Suceava (RO)
(72) Inventor: Dabija, Adriana, 727371 jud. Suceava (RO); Codina, Georgiana Gabriela, 720011 jud. Suceava (RO)

(57) **Abstract**

The invention is about a canned fish paste type product, with the role of a functional food, due to it multiple health benefits.

The trout paste with chanterelle mushrooms and wild garlic, according to the invention, is a canned fish paste type, with a high nutritional value, which contains only natural ingredients. The obtaining of the trout paste with chanterelle mushrooms and wild garlic, according to the invention, consists: vacuum boiling of gutted and decapitated trout, cooling, deboning, the raw materials addition according to the manufacturing recipe, mixing-homogenization composition up to a creamy paste is obtained, unctuous, dosing in glass jars followed by airtight closure, sterilization jars and cooling. Paste trout cans type is subjected to thermostatic operation, followed by sorting and labeling. The finished product is stored in dry, clean, disinfected, deratized, well ventilated spaces to a temperature of 0...4°C and a relative humidity of max. 75%.

## Description

The invention is about a canned fish paste type product, with a high nutritional value, which contains only natural ingredients without any food additives addition and to a process for obtaining it.

Canned fish paste type are known in a large variety of assortments, obtained from fish meat with or without other additives, subjected to the sterilization process, through the heat. The disadvantages of these products type are that a large part of its are packed in airtight metal cans, may have low nutritional value and may contain food additives [1,2].

The process, according to the invention, eliminates these disadvantages and extends the range of canned fish products, in that, trout paste with chanterelle mushrooms (*Cantharellus cibarius*) and wild garlic (*Allium ursinum*) is obtained only from natural ingredients with multiple benefits on consumer health, does not contain preservatives or stabilizer substances.

The technical problem solved by the invention consists in trout paste fortification with ingredients with high beneficial effects on the finished product quality, and to the trout paste packing is used an inert glass packaging on the composition of the trout paste [3,4].

The obtain of the product, according to the invention, consists in the vacuum boiling of gutted and decapitated trout, cooling, deboning, the chanterelle mushrooms and wild garlic addition, mixing-homogenization composition up to a creamy paste is obtained, unctuous, dosing in glass jars followed by airtight closure, sterilization jars in order to destroy the vegetative and spores forms of possible contamination microorganisms and cooling.

Paste trout cans are subjected to thermostatic operation, in order to test the sterilization treatment effectiveness, followed by sorting in order to remove the defective packaging, wipe the jars from water debris and any impurities, labelling and storage of the finished product.

The application of the invention leads to the following advantages:
- obtaining an assortment of the canned fish paste from trout meat that is superior to other fish species, mainly in the terms of protein quality, but especially due to it low fat content; trout is an extremely valuable food due to it high quality protein content, fat with a high polyunsaturated fatty acids content with a great efficiency on the human body, vitamins
- (A, B and D), minerals (iron, phosphorus, potassium, magnesium); low sodium levels content, which favors its use in the heart patients or kidney patients diet, diabetics (does not contain carbohydrates), in the children diet, the elderly, but also healthy adults and children;
- obtaining an assortment of canned paste fish with beneficial effects on human health due to the chanterelle mushrooms from the recipe, as follows: the chanterelle mushrooms combat fatigue and asthenia, prevent the cardiovascular diseases and even cancer due to it B vitamins (riboflavin, niacin, folic acid, thiamine and B6), vitamin D and minerals (potassium, copper, zinc, selenium, iron, magnesium, phosphorus and calcium) content, they are very rich in amino acids, especially glutamate, which gives them a taste close to that of meat; they contain a low amount of sodium, does not contain cholesterol and they have a low energy value;
- obtaining an assortment of canned paste fish with beneficial effects on human health due to the wild garlic, a spicy plant with phytotherapeutic properties from the recipe, as follows: wild garlic has a purifying, detoxifying, antiseptic, antiviral, antimicrobial effect, immunomodulatory role, antihypertensive action, peripheral vasodilator, antithrombotic, blood thinner, bronchodilator, expectorant and antitumor action; consumed for a long period of time, this plant through its substances is an effective remedy in heart disease treatment, in memory improving and in treating insomnia; contains allyl sulfide, vitamin A, vitamin C, carotenoids, ethereal oil, volatile oils, allicin, mineral salts (calcium, iron, phosphorus, copper, sodium).

Is given, bellow, an example of obtaining of the trout paste with chanterelle mushrooms and wild garlic according to the invention.

To obtain 100 kg of trout paste with chanterelle mushrooms and wild garlic are necessary the following ingredients: 50 kg trout meat, 20 kg chanterelle mushrooms, 20 kg wild garlic, 6 L truffle oil, 2 L raspberry vinegar, 1 kg salt 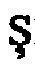 i 1 kg pepper.

To obtain the trout paste with chanterelle mushrooms and wild garlic is applied a process, which includes the following technological operations: vacuum boiling of gutted and decapitated trout at a maximum temperature of 50°C for 15 minutes, cooling to a temperature of 20°C in order to make the manual trout deboning, the chanterelle mushrooms and wild garlic addition, mixing-homogenization composition up to a creamy paste is obtained, unctuous, the dressing obtained from truffle oil and raspberry vinegar addition, salt and pepper seasoning, homogenization of the composition. The product is dosed in glass jars of 100g capacity, received in advance qualitatively and quantitatively and washed before use. The dosing operation in jars is followed by their hermetic closure, sterilization of jars at 120°C for 30 minutes, in order to destroy the vegetative and spores forms of possible contamination microorganisms and cooling to 20°C. Paste trout cans are subjected to thermostatic operation in order to test the sterilization treatment effectiveness to 37°C for 7 days, followed by sorting in order to remove the defective packaging, wipe the jars from water debris and any impurities and labeling. The finished product is stored in dry, clean, disinfected, deratized, well ventilated spaces at a temperature of 0... 4°C and a relative humidity of max. 75%.

The product, according to the invention, by its composition, is a functional food, with high quality protein content, with a high biological value. The trout paste with chanterelle mushrooms and wild garlic contains 11.45% protein, 4.71% carbohydrates and 6.84% fat. The product has an energy value of 126 kcal/100 g product (528 kJ / 100 g product).

The process for obtaining trout paste with chanterelle mushrooms and wild garlic, according to the invention, can be reproduced with the same characteristics and performances whenever are necessary, which is an argument in order to comply with the criterion of industrial applicability.

### BIBLIOGRAPHICAL REFERENCES

1. Banu, C., et al., Food quality and sensory analysis, AGIR Publishing House, Bucharest, 2007
2. Banu, C., et al., Fish - functional food, AGIR Publishing House, Bucharest, 2010
3. Nour, V., Raw materials of animal origin for the food industry, Universitaria Publishing House, Craiova, 2018
4. Dabija, A., *Biotechnologies in the food industry, Volume II,* Performantica Publishing House, Ia 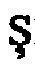 i, 2019

## Claims

1. Trout paste with chanterelle mushrooms and wild garlic, **characterized in that,** for 100 kg finished product are necessary the following raw materials: an amount of 50 kg trout meat, an amount of 20 kg chanterelle mushrooms, an amount of 20 kg wild garlic, an amount of 6 L of truffle oil, an amount of 2 L of raspberry vinegar, an amount of 1 kg salt and an amount of 1 kg pepper.

2. Process for obtaining trout paste with chanterelle mushrooms and wild garlic, obtained according to the claim 1, **characterized in that,** it is a canned fish paste, with 11.45% protein, 4.71% carbohydrates and 6.84% fat, with an energy value of 126 kcal / 100g product (528kJ / 100g product), obtained by sterilization to 120°C for 30 minutes, in 100 g glass jars hermetically sealed.
